# EUROPÄISCHE PATENTSCHRIFT

(11) **EP 3 535 156 B1**
(45) Veröffentlichungstag und Bekanntmachung des Hinweises auf die Patenterteilung: **10.03.2021**
(21) Anmeldenummer: 17794313.1
(22) Anmeldetag: 02.11.2017
(51) Int. Cl.: B60N 2/02

(54) **VERSTELLBARER FAHRZEUGSITZ**
ADJUSTABLE VEHICLE SEAT
SIÈGE DE VÉHICULE RÉGLABLE

(30) Priorität: 02.11.2016 DE 102016221507
(43) Veröffentlichungstag der Anmeldung: 11.09.2019
(73) Patentinhaber: Bayerische Motoren Werke Aktiengesellschaft, 80809 München (DE)
(72) Erfinder: FRANZ, Matthias, 83098 Brannenburg (DE); BREITWEG, Uwe, 86919 Utting am Ammersee (DE); JANKA, Ingo, 85221 Dachau (DE); LATHWESEN, Harald, 85419 Mauern (DE)
(86) Internationale Anmeldenummer: PCT/EP2017/078098
(87) Internationale Veröffentlichungsnummer: WO 2018/083197

(56) Entgegenhaltungen:
- DE-A1- 19 644 376
- DE-A1- 19 851 698
- DE-A1- 19 853 156
- DE-A1-102010 049 152

## Beschreibung

### TECHNISCHES GEBIET

Die Erfindung betrifft einen verstellbaren Fahrersitz eines Fahrzeugs gemäß dem Oberbegriff des Patentanspruchs 1. Sie betrifft weiterhin ein Fahrzeug mit zumindest einem solchen verstellbaren Fahrzeugsitz.

### HINTERGRUND DER ERFINDUNG

Fahrzeugsitze werden üblicherweise über viele einzelne Verstellvariablen in einer Abfolge der Verstellvariablen eingestellt. Insbesondere erfolgt die Einstellung über elektrisch zu verstellende Einheiten mittels Sitzverstellschaltern oder über mechanisch zu verstellende Einheiten mittels mechanischer Entriegelungshebel. Der Fahrzeugpassagier benötigt viel Zeit, um alle einzelnen verstellbaren Einheiten zu justieren. Oftmals muss korrigiert werden, da sich die einzelnen Verstellungen gegenseitig beeinflussen.

### STAND DER TECHNIK

Aus der DE 10 2009 036 278 A1 ist ein verstellbarer Fahrzeugsitz mit Massagefunktionalität bekannt, der mit Massageelementen versehen ist. Dieser Fahrzeugsitz weist eine Mehrzahl von Sensoren auf, die Gewicht, Bewegung oder Druck als Eingangsgröße erfassen können. Eine erfasste Eingangsgröße wird mit vorgegebenen Größen verglichen und es erfolgt in Abhängigkeit von der Abweichung eine Rückmeldung mittels der Massageelemente. Dadurch soll es möglich sein, vorgegebene Muskelgruppen der auf dem Fahrzeugsitz sitzenden Person zu trainieren.

Weiterhin ist aus der DE 198 51 698 A1 ein verstellbarer Fahrzeugsitz bekannt, bei dem die Verstellung bzw. Einstellung eines mehrere Sitzelemente über Antriebsmittel, beispielsweise elektromotorischer, pneumatischer oder hydraulischer Art, über mindestens einen Drucksensor, der in den Fahrzeugsitz integriert ist, ausgelöst wird. Der Drucksensor erfasst den von einem Passagier abgegebenen Auflagedruck und gibt den erfassten Auflagedruck an eine programmierbare Steuereinheit ab, die sowohl mit dem Drucksensor als auch mit den Antriebsmitteln verbunden ist. Durch Vergleich des aktuellen Auflagedrucks mit den in der Steuereinheit abgespeicherten Referenzdruckwerten wird ermittelt, ob und wie die Antriebsmittel eine Verstellung verschiedener Sitzelemente bewirken. Vorteil bei diesem bekannten Fahrzeugsitz ist, dass die Person lediglich durch mehr oder weniger starkes Pressen bestimmter Körperteile gegen bestimmte Sitzelemente deren Verstellung einleiten kann.

### DARSTELLUNG DER ERFINDUNG

Aufgabe der vorliegenden Erfindung ist es, einen gattungsgemäßen verstellbaren Fahrzeugsitz so auszugestalten, dass eine verbesserte automatisierte Sitzeinstellung ermöglicht wird.

Diese Aufgabe wird gelöst mit einem verstellbaren Fahrzeugsitz mit den Merkmalen des Patentanspruchs 1 oder mit einem verstellbaren Fahrzeugsitz mit den Merkmalen des Patentanspruchs 2.

Der verstellbare Fahrzeugsitz ist mit einem eine Sitzfläche aufweisenden Sitzboden und einer eine Lehnenfläche aufweisenden Sitzlehne versehen, wobei im Sitzboden und/oder in der Sitzlehne Sensoren vorgesehen sind, die von einer auf dem Fahrzeugsitz sitzenden Person ausgeübte Kräfte, Drücke und/oder Bewegungen erfassen und daraufhin ein Signal abgeben. Erfindungsgemäß ist eine Steuerungseinrichtung vorgesehen, die die von den Sensoren abgegebenen Signale erfasst und im Fahrzeugsitz vorgesehene Aktuatoren zur Verstellung des Sitzbodens und/oder der Sitzlehne oder von Komponenten des Sitzbodens und/oder der Sitzlehne ansteuert, um den Fahrzeugsitz zu verstellen.

Diese Sensorbetätigung der Sitzverstellung gestaltet die Sitzverstellung intuitiv. Die Verstellung kann analog und fließend erfolgen. Die gewünschte Haltungsänderung wird umgehend im Sitz mit Eindrücken des Körpers umgesetzt. Die Sitzverstellung erfolgt durch in den Sitz eingeleiteten Körperdruck oder eingeleitete Kraft an jenen Stellen, an denen Sensoren vorgesehen sind.

Gemäß Patentanspruch 1 ergeben sich die erfindungsgemäßen Vorteile, wenn die Steuerungseinrichtung die von den Sensoren abgegebenen, erfassten Signale auswertet und daraus ein aktuelles Belastungsprofil des Sitzbodens und/oder der Sitzlehne ermittelt, wenn die Steuerungseinrichtung das ermittelte aktuelle Belastungsprofil mit in einer Speichereinrichtung gespeicherten, eine definierte Körperbewegung einleitenden Belastungsprofilen vergleicht und das dem aktuellen Belastungsprofil nächstkommende eine definierte Körperbewegung einleitende Belastungsprofil als prädiktives Belastungsprofil bestimmt und wenn die Steuerungseinrichtung die Aktuatoren derart ansteuert, dass der Sitzboden und/oder die Sitzlehne oder Komponenten davon entsprechend der dem prädiktiven Belastungsprofil zugeordneten Körperbewegung verstellt werden. Die Erfindung nutzt aus, dass bestimmte Belastungsprofile ein Belastungsmuster bilden, das einer bevorstehenden Bewegung vorausgeht, sodass die Sitzverstellung prädiktiv auf eine Sitzeinstellung erfolgt, die an einen Zwischen- oder Endzustand der prognostizierten Körperbewegung angepasst ist.

Mit der Erfindung kann eine vorauseilende und damit schnelle Sitzeinstellung erfolgen.

Die erfindungsgemäße Lösung nach Patentanspruch 2 zeichnet sich dadurch aus, dass die Steuerungseinrichtung die von den Sensoren abgegebenen, erfassten Signale über eine vorgegebene Zeitspanne auswertet und daraus eine zeitabhängige aktuelle Belastungsprofildynamik des Sitzbodens und/oder der Sitzlehne ermittelt, dass die Steuerungseinrichtung die ermittelte aktuelle Belastungsprofildynamik mit in einer Speichereinrichtung gespeicherten, physiologische Körperbewegungsmuster wiedergebenden Belastungsprofildynamiken vergleicht und die der aktuellen Belastungsprofildynamik nächstkommende ein definiertes physiologisches Körperbewegungsmuster wiedergebende Belastungsprofildynamik als prädiktive Belastungsprofildynamik bestimmt und dass die Steuerungseinrichtung die Aktuatoren derart ansteuert, dass der Sitzboden und/oder die Sitzlehne oder Komponenten davon entsprechend dem der prädiktiven Belastungsprofildynamik zugeordneten Körperbewegungsmuster zeitabhängig verstellt werden. Diese dynamische Verstellung ermöglicht es, dass die gewünschte Haltungsänderung umgehend im Fahrzeugsitz mit Eindrücken des Körpers umgesetzt wird. Diese Art der Verstellung des Fahrzeugsitzes bildet die physiologischen Bewegungsmuster des Menschen ab. Die Verstellung erfolgt dabei nicht in Einzelbewegungen einzelner verstellbarer Sitzkomponenten, sondern in synchronen Verstellbewegungen einzelner Sitzkomponenten entsprechend anatomischer und physiologischer Körperbewegungsmuster.

Ein physiologisches Körperbewegungsmuster ist eine Aneinanderreihung von Bewegungen, die ein Insasse beispielsweise in einem Fahrzeug ausführt. Physiologische Körperbewegungsmuster stellen eine bestimmte Abfolge von Körperbewegungen dar und sind nicht zufällig, sondern wiederholen sich in ähnlicher und damit in einer reproduzierbaren Weise bei gleichartigen Bewegungsvorgängen. Zum Beispiel beinhaltet das physiologische Körperbewegungsmuster, wenn ein Insasse in einem Fahrzeug, ausgehend von einer Position auf einem Sitz mit Blickrichtung in Fahrtrichtung, eine Vierteldrehung nach rechts ausführen möchte, immer eine Abstützung im Bereich der Auflage des linken Oberschenkels am Sitzboden (linke Seitenwange des Sitzbodens) sowie eine Krafteinleitung im rechten Thoraxbereich des Sitzes. Bei einer derartigen Druckverteilung im Sitz (aktuelle Belastungsprofildynamik) kann auf den Wunsch des Insassen nach einer Vierteldrehung des Sitzes geschlossen werden. Durch Vergleich mit gespeicherten, physiologische Körperbewegungsmuster wiedergebenden Belastungsprofildynamiken wird dieser Wunsch des Insassen nach einer Vierteldrehung des Sitzes verifiziert und der Sitz (nachlaufend, simultan oder vorauseilend) um 90° gedreht. Diese Drehung des Sitzes ist beispielsweise in einem autonom fahrenden Fahrzeug oder im Stillstand eines konventionellen Fahrzeugs von Vorteil, damit sich der Insasse anderen Insassen im Fahrzeug besser zuwenden kann.

Das Zuwenden zu anderen Insassen des Fahrzeugs kann (alternativ oder zusätzlich) durch ein Abklappen des so genannten Lehnenkopfes erleichtert werden. Der Lehnenkopf ist der obere Bereich der Sitzlehne. Der Lehnenkopf kann um eine Klappachse, die in einer Horizontalebene durch die Sitzlehne liegt, zum Beispiel etwa auf halber Höhe der Sitzlehne, nach hinten abgeklappt werden.

Von den physiologischen Körperbewegungsmustern zu unterscheiden sind Bewegungsmuster, die durch Einwirkung äußerer Kräfte auf den Insassen entstehen, zum Beispiel Beschleunigung, Abbremsen, Kurvenfahrt. Diese Zustände sind eindeutig sensierbar und lösen keine Sitzverstellung aus. Beispielsweise stützt sich bei Befahren einer Rechtskurve ein Insasse verstärkt mit seinem linken Oberschenkel an der linken Seitenwange des Sitzes ab, es fehlt jedoch im Unterschied zum oben stehenden Beispiel der Einleitung einer Vierteldrehung des Sitzes die Krafteinleitung im rechten Thoraxbereich.

Parameter aus dem Fahrbetrieb des Fahrzeugs können von der Steuerungsvorrichtung zur Einleitung oder zur Unterdrückung einer Sitzverstellung herangezogen werden. Im vorangegangenen Beispiel einer Kurvenfahrt kann ein Querbeschleunigungssignal von der Steuerungsvorrichtung berücksichtigt werden.

Die Sensoren, deren Signale die Eingangsgrößen für die Steuerungseinrichtung bilden, sind bevorzugt am Sitz angeordnet. Selbstverständlich kann jedoch wenigstens ein Sensor auch an einer vom Sitz unterschiedlichen Komponente des Fahrzeugs angeordnet sein. Beispielsweise kann durch Sensoren am Fahrzeugboden erfasst werden, ob sich ein Insasse am Fahrzeugboden abstützt, um beispielsweise eine Vierteldrehung seines Sitzes einzuleiten. Somit kann das Signal eines Sensors im Bereich der Aufstandsfläche des linken Fußes des Insassen als Eingangsgröße für die Steuerungseinrichtung verwendet werden, um bei Vorliegen weiterer Sensorsignale eine Vierteldrehung des Sitzes nach rechts einzuleiten.

Von Vorteil ist dabei, wenn die Verstellung des Sitzbodens und/oder der Sitzlehne oder von Komponenten davon synchron zu dem der prädiktiven Belastungsprofildynamik zugeordneten physiologischen Körperbewegungsmuster erfolgt.

Alternativ kann die Verstellung des Sitzbodens und/oder der Sitzlehne oder von Komponenten davon dem der prädiktiven Belastungsprofildynamik zugeordneten physiologischen Körperbewegungsmuster vorauseilend oder nacheilend erfolgen.

Vorteilhafte Weiterbildungen der Erfindung sind in den Unteransprüchen angegeben.

Bei einer vorteilhaften Ausführungsform wird bei der Erfassung einer Eingangsgröße mittels zumindest eines der Sensoren in einem Bereich des Fahrzeugsitzes dieser Bereich von zumindest einem der Aktuatoren verstellt, um der Eingangsgröße nachzugeben. Dies ermöglicht eine Anpassung des Fahrzeugsitzes an die aktuelle Sitzhaltung eines auf dem Fahrzeugsitz sitzenden Passagiers.

Von Vorteil ist es, wenn die Steuerungseinrichtung die von den Sensoren abgegebenen, erfassten Signale auswertet und daraus ein aktuelles Belastungsprofil des Sitzbodens und/oder der Sitzlehne ermittelt, wenn die Steuerungseinrichtung dann das ermittelte aktuelle Belastungsprofil mit zumindest einem in einer Speichereinrichtung gespeicherten Standard-Belastungsprofil vergleicht und wenn die Steuerungseinrichtung daraufhin die Aktuatoren derart ansteuert, dass das ermittelte Belastungsprofil an das Standard-Belastungsprofil angenähert oder angeglichen wird. Diese statische Verstellbarkeit ermöglicht eine besonders wirksame Anpassung des Fahrzeugsitzes an die aktuelle Sitzhaltung eines auf dem Fahrzeugsitz sitzenden Passagiers.

Beispielsweise kann die oben beschriebene Anpassung des Fahrzeugsitzes an die aktuelle Sitzhaltung bei einer längeren Autobahnfahrt erfolgen, wenn eine auf dem Fahrzeugsitz sitzende Person (Insasse), zum Beispiel der Fahrer, bequemer sitzen möchte und diesen Wunsch durch ein verstärktes Anlegen bestimmter Körperpartien an den Sitz zum Ausdruck bringt. Daraufhin werden nach dem Abgleich des ermittelten Belastungsprofils mit den in der Speichereinrichtung gespeicherten Standard-Belastungsprofilen die Aktuatoren derart angesteuert, dass das ermittelte Belastungsprofil dem entsprechenden Standard-Belastungsprofil angenähert oder angeglichen wird.

Eine vorteilhafte Ausführungsform der Erfindung, die insbesondere für den Fahrersitz des Fahrzeugs vorgesehen ist, zeichnet sich dadurch aus, dass eine erste Gruppe von Aktuatoren nur im Stand des (nicht-autonom fahrbaren) Fahrzeugs von der Steuerungseinrichtung ansteuerbar ist und dass eine zweite Gruppe von Aktuatoren während der Fahrt und im Stand des Fahrzeugs von der Steuerungseinrichtung ansteuerbar ist. Zur ersten Gruppe gehören die sogenannten anthropometrischen Einstellungen des Fahrzeugsitzes, die die Sitzposition des Passagiers in Bezug auf die Sitzumgebung im Fahrzeug definieren und die für den Fahrer gewährleisten, dass das Fahrzeug sicher gesteuert werden kann. Zur zweiten Gruppe gehören die sogenannten Komforteinstellungen, die gefahrlos auch während der Fahrt verändert werden können. Im Falle eines autonomen Fahrbetriebs, bei dem der Fahrer nicht benötigt wird, können auch anthropometrische Einstellungen während der Fahrt vorgenommen werden.

Von Vorteil ist dabei, wenn die zweite Gruppe von Aktuatoren jene Aktuatoren aufweist, die die Verstellung von zumindest einer der folgenden Fahrzeugsitzkomponenten beziehungsweise Fahrzeugsitzeinstellungen bewirken: Seitenwangen des Sitzbodens, Seitenwangen der Sitzlehne, Sitzflächenbreite, Lehnenflächenbreite, Sitzflächenlänge, Oberschenkelauflage, Lordosenstütze.

Bei einer weiteren bevorzugten Ausführungsform des erfindungsgemäßen Fahrzeugsitzes, bei der Aktuatoren zur Verstellung von Komponenten des Sitzbodens und/oder der Sitzlehne angesteuert werden, bewirkt die Steuerungseinrichtung, dass durch eine entsprechende Belastung von Sensoren der Sitzboden und/oder die Sitzlehne in Bezug auf eine Sitzlängsmittelebene asymmetrisch verstellt werden. So kann beispielsweise ein entsprechend geeignetes Belastungsmuster bewirken, dass eine um eine Lehnenhochachse als Ganzes verdrehbare oder in sich verdrehbare Sitzlehne mittels der angesteuerten Aktuatoren verdreht beziehungsweise tordiert wird, um ein bequemeres Erreichen des Sicherheitsgurtes durch die auf dem Fahrzeugsitz sitzende Person beim Anschnallen zu ermöglichen, wie dies beispielsweise in der DE 10 2013 224 873 A1 in Verbindung mit einer aktiven Betätigung durch den Benutzer, nämlich durch einseitiges Zurückdrücken der Sitzlehne, beschrieben ist.

Schließlich ist die Erfindung auch auf ein Fahrzeug mit zumindest einem der vorgenannten Fahrzeugsitze gerichtet.

Bevorzugte Ausführungsbeispiele der Erfindung mit zusätzlichen Ausgestaltungsdetails und weiteren Vorteilen sind nachfolgend unter Bezugnahme auf die beigefügte Zeichnung näher beschrieben und erläutert.

### KURZE BESCHREIBUNG DER ZEICHNUNGEN

Es zeigt:
- Fig. 1: eine perspektivische Ansicht eines erfindungsgemäßen Fahrzeugsitzes und
- Fig. 2: eine schematische Darstellung von Sensoren und Aktuatoren des Fahrzeugsitzes aus Fig. 1.

### DARSTELLUNG VON BEVORZUGTEN AUSFÜHRUNGSBEISPIELEN

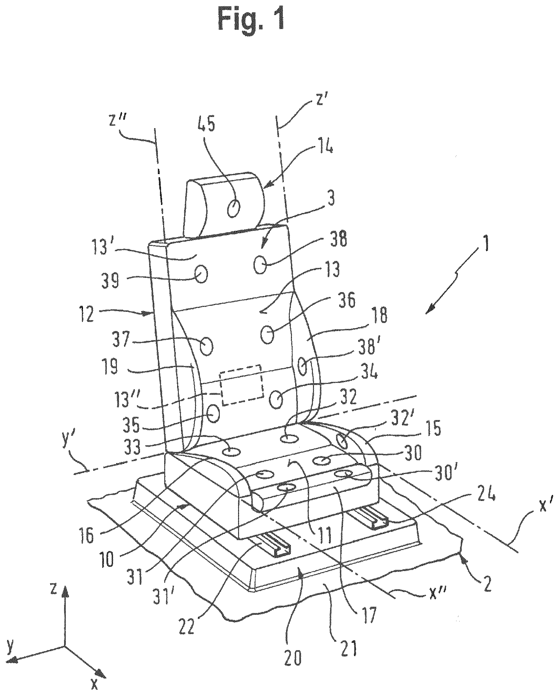

Fig. 1 zeigt in perspektivischer Darstellung einen erfindungsgemäßen Fahrzeugsitz 1, der auf einer Sitzkonsole 20 in Schienen 22, 24 längsverschiebbar angeordnet ist, wobei die Sitzkonsole 20 auf dem Boden 21 des Innenraums eines Fahrzeugs 2 angeordnet ist.

Der Fahrzeugsitz 1 umfasst einen eine Sitzfläche 11 aufweisenden Sitzboden 10, eine eine Lehnenfläche 13 aufweisende Sitzlehne 12 sowie eine Kopfstütze 14. Die Neigung der Lehne 12 in Bezug auf den Sitzboden 10 ist in üblicher Weise um eine parallel zur Fahrzeugquerachse y liegende Lehnenneigungsachse y' verstellbar. Auch die Kopfstütze ist in allgemein bekannter Weise in Richtung der Fahrzeughochachse z verschiebbar und vorzugsweise auch in Richtung der Fahrzeuglängsachse x verstellbar.

Der Sitzboden 10 wird an seiner Oberseite durch eine linke Seitenwange 15 und eine rechten Seitenwange 16 seitlich begrenzt, die in ihrer Neigung zur Sitzfläche 11 jeweils um eine zur Fahrzeuglängsachse x parallele oder zu dieser geneigte Schwenkachse x' beziehungsweise x" verschwenkbar sind. Des Weiteren ist der Sitzboden 10 am in Fahrtrichtung vorderen Ende der Sitzfläche 11 mit einer in Fahrzeuglängsrichtung verstellbaren Oberschenkelauflage 17 versehen.

Die vorstehend beschriebenen Verstellbarkeiten der einzelnen Komponenten des Sitzbodens 10 erfolgen beispielsweise mittels in Fig. 1 nicht dargestellter Aktuatoren, wie sie bereits auch in herkömmlichen Fahrzeugsitzen für die elektrische Sitzverstellung verwendet werden.

Die Sitzlehne 12 ist mit die Lehnenfläche 13 seitlich begrenzenden und unterhalb des Schulterbereichs 13' der Lehnenfläche 13 vorgesehenen Lehnenwangen, nämlich, einer linken Lehnenwange 18 und einer rechten Lehnenwange 19 versehen. Auch die Lehnenwangen 18, 19 sind um eine jeweilige parallel zur Lehnenlängserstreckung ausgerichtete Schwenkachse z', z" schwenkbar, sodass über diese Verschwenkbarkeit die Lehnenbreite vorwiegend im Lendenbereich einer auf dem Fahrzeugsitz sitzenden Person verstellbar ist.

Anstelle der Verschwenkbarkeit der Seitenwangen 15, 16 des Sitzbodens 10 und/oder der Lehnenseitenwangen 18, 19 können diese auch in Fahrzeugquerrichtung (y-Richtung) transversal verfahrbar sein oder sie können durch pneumatische Kissen aufblasbar gestaltet sein. Diese pneumatische Aufblasbarkeit kann auch zusätzlich zu einer Verschwenkbarkeit oder einer transversalen Verstellbarkeit der entsprechenden Seitenwangen 15, 16 beziehungsweise Lehnenwangen 18, 19 vorgesehen sein.

Die Sitzlehne 12 ist weiterhin mit einer elektromechanisch oder pneumatisch verstellbaren Lordosenstütze 13" versehen, die in Fig. 1 nur schematisch dargestellt ist und die an sich in Fahrzeugsitzen bereits bekannt ist.

Sowohl im Sitzboden 10 als auch in der Sitzlehne 12 sind eine Vielzahl von Sensoren 30, 30', 31, 31', 32, 32', 33, 33', 34, 35, 36, 37, 38, 38', 39, 39' vorgesehen, die eine Sensoranordnung 3 des Fahrzeugsitzes 1 bilden. Die gezeigte Anzahl und Anordnung der Sensoren ist in Fig. 1 lediglich beispielhaft dargestellt; es können durchaus auch weniger oder mehr Sensoren vorgesehen sein und die Sensoren können auch an anderen Stellen der Sitzlehne 12 beziehungsweise des Sitzbodens 10, der Kopfstützte 14 sowie der anderen Sitzkomponenten angeordnet sein. Selbstverständlich können auch die Seitenwangen 15, 16 und die Lehnenwangen 18, 19 mit entsprechenden Sensoren 32', 38' sowie 33', 39' (in Fig. 1 nicht dargestellt) versehen sein. Auch die Kopfstütze 14 kann ebenso wie die Oberschenkelauflage 17 mit Sensoren 45 beziehungsweise 30', 31' versehen sein.

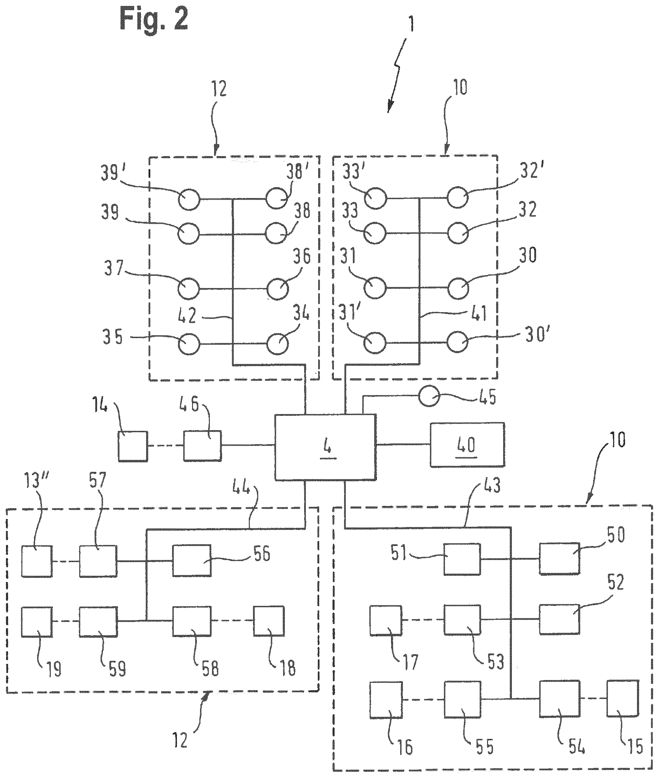

Fig. 2 zeigt eine schematische Darstellung der im Fahrzeugsitz 1 vorgesehenen Sensoren und Aktuatoren und deren Verbindung mit einer Steuereinrichtung.

Die im Sitzboden vorgesehenen und bereits beschriebenen Sitzflächensensoren 30, 31, 32 und 33 sind, beispielsweise über einen ersten Datenbus 41, mit einer im Fahrzeugsitz 1 integrierten oder außerhalb davon angeordneten Steuerungseinrichtung 4 elektrisch leitend zur Datenübertragung verbunden. Ebenfalls über diesen ersten Datenbus 41 ist die Steuerungseinrichtung 4 mit zwei in der Oberschenkelauflage 17 vorgesehenen Sensoren 30', 31' und mit zwei in der linken Seitenwange 15 beziehungsweise der rechten Seitenwange 16 vorgesehenen Sensoren 32' beziehungsweise 33' verbunden.

Auf die gleiche Weise ist die Steuerungseinrichtung 4 elektrisch leitend zur Datenübertragung über einen zweiten Datenbus 42 mit den in der Sitzlehne 12 vorgesehenen Lehnenflächen-Sensoren 34, 35, 36, 37, 38 und 39 sowie mit einem in der linken Seitenwange 18 beziehungsweise in der rechten Seitenwange 19 vorgesehenen Sensor 38' beziehungsweise 39' verbunden. Auch die Kopfstütze 14 weist zumindest einen Sensor 45 auf, der ebenfalls mit der Steuerungseinrichtung 4 elektrisch leitend zur Datenübertragung verbunden ist.

Die vorgenannten Sensoren liefern Signale aufgrund von Kräften, Drücken und/oder Bewegungen, die von einer auf dem Fahrzeugsitz 1 sitzenden Person auf die Sitzfläche 11 beziehungsweise die Lehnenfläche 13 und/oder die Seitenwangen 15, 16, die Lehnenwangen 18, 19 und/oder die Kopfstütze 14 ausgeübt werden. Die Steuerungseinrichtung 4 empfängt diese Signale und bildet daraus statische Belastungsprofile und/oder dynamische Belastungsprofile (Belastungsprofildynamiken) und vergleicht diese Belastungsprofile beziehungsweise Belastungsprofildynamiken mit in einer mit der Steuerungseinrichtung 4 verbundenen Speichereinrichtung 40 gespeicherten vorgegebenen Belastungsprofilen beziehungsweise Belastungsprofildynamiken. Aufgrund dieses Vergleichs wird dann von einem in der Steuerungseinrichtung 4 vorgesehenen Computer eine Entscheidung über eine vorzunehmende Verstellung des Fahrzeugsitzes 1 getroffen. Diese Entscheidung resultiert in der Abgabe einer Mehrzahl von Steuerbefehlen an im Fahrzeugsitz 1 vorgesehene Aktuatoren.

Zur Umsetzung der Verstellung ist die Steuerungseinrichtung 4 über einen dritten Datenbus 43 mit einem Aktuator 50 für die Längsverschiebbarkeit des Sitzbodens 10 und damit des Fahrzeugsitzes 1, mit einem Aktuator 51 zur Höhenverstellung des Sitzbodens 10, mit einem Aktuator 52 zur Neigungsverstellung des Sitzbodens 10, mit einem Aktuator 53 zur Längsverstellung der Oberschenkelauflage 17, mit einem Aktuator 54 zur Verstellung der linken Seitenwange 15 und mit einem Aktuator 55 zur Verstellung der rechten Seitenwange 16 des Sitzbodens 10 elektrisch zur Signalübertragung verbunden.

Außerdem ist die Steuerungseinrichtung 4 über einen vierten Datenbus 44 mit einem Aktuator 56 zur Neigungsverstellung der Sitzlehne 12, mit einem Aktuator 57 zur Verstellung der Lordosenstütze 13", mit einem Aktuator 58 zur Verstellung der linken Lehnenwange und mit einem Aktuator 59 zur Verstellung der rechten Lehnenwange zur elektrischen Signalübertragung verbunden. Schließlich ist die Steuerungseinrichtung 4 mit einem weiteren Aktuator 46 zur Verstellung der Kopfstütze 14 verbunden.

Wenn vorstehend von "Aktuator" die Rede war, so ist dieser Begriff nicht im Sinne eines jeweils einzelnen Aktuators zu verstehen, sondern es kann für die jeweilige Verstellbarkeit auch eine Mehrzahl von Aktuatoren vorgesehen sein. Die Aktuatoren sind vorzugsweise elektromechanische Aktuatoren, zum Beispiel Stellmotoren, es können aber ebenso gut elektro-pneumatische oder elektro-hydraulische Aktuatoren vorgesehen sein. Auch ist es für den Fachmann selbstverständlich, dass die vorliegende Erfindung nicht auf die in den Figuren gezeigten und in der Figurenbeschreibung beschriebenen Aktuatoren beschränkt ist, sondern dass in dem erfindungsgemäßen Fahrzeugsitz noch weitere Aktuatoren und entsprechende Sensoren für andere als die genannten Verstellaufgaben vorgesehen sein können.

Auch wenn, wie in der Beschreibungseinleitung dargelegt worden ist, die Betätigung der jeweiligen Aktuatoren aufgrund eines statischen Belastungsprofils erfolgen kann, um den Fahrzeugsitz 1 einer aktuellen Körperhaltung der auf dem Fahrzeugsitz 1 sitzenden Person anzupassen und die Sitzfläche und/oder die Lehnenfläche und/oder die sonstigen Sitzkomponenten bei einer Änderung der Körperhaltung nachzuführen, so liegt eine besonders bevorzugte Umsetzung der erfinderischen Idee, die Sitzverstellung aufgrund von im Fahrzeugsitz erfassten Sensorensignalen vorzunehmen, darin, aus einer aktuellen Körperhaltung oder einer aktuellen Körperbewegung der auf dem Fahrzeugsitz 1 sitzenden Person ein prädiktives statisches Belastungsprofil oder eine prädiktive Belastungsprofildynamik zu ermitteln und den Fahrzeugsitz entsprechend auf die vorausberechnete Körperposition einzustellen. Mit anderen Worten wird durch die Auswertung der von den im Fahrzeugsitz verbauten Sensoren gelieferten Signale ein Bewegungswunsch oder ein Positionierungswunsch der auf dem Fahrzeugsitz 1 sitzenden Person vorausgesagt und der Fahrzeugsitz wird daraufhin auf die Körperhaltung beziehungsweise Körperposition eingestellt, die dem Ergebnis dieses Wunsches entspricht.

Richtet sich beispielsweise die auf dem Fahrzeugsitz 1 sitzende Person aus einer entspannten, leicht nach hinten geneigten Sitzposition in eine aufrechte Position auf, so wird dies durch die Entlastung der Sensoren im Schulterbereich der Lehnenfläche und durch eine entsprechende von den Sensoren der Sitzfläche 11 aufgenommenen Druckverlagerung erfasst und die Sitzlehne wird automatisch nach vorne geneigt, um auch die Vorwärtsbewegung des Oberkörpers zu unterstützen. Bildet die Person dann auch noch ein Hohlkreuz aus, was ebenfalls durch die in der Lehnenfläche 13 vorgesehenen Sensoren detektiert werden kann, so wird die Lordosenstütze 13" entsprechend nach vorne bewegt. Es ist ersichtlich, dass dieses Bewegungsmuster nur ein Beispiel für die automatische Verstellung des Fahrzeugsitzes 1 darstellt und dass viele weitere Bewegungsbeispiele gebildet werden könne, deren Belastungsprofil oder Belastungsprofilverlauf (Belastungsprofildynamik) ermittelt und in der Speichereinrichtung 40 als Referenz abgelegt werden können.

Neben den oben beschriebenen "entlastenden" Bewegungsmustern (Aufrichten, Hohlkreuz) können auch "belastende" Bewegungsmuster eine Verstellung des Sitzes bewirken, wie beispielsweise die eingangs beschriebene Vierteldrehung des Sitzes durch Krafteinleitung in den Sitz.

Die Erfindung ist nicht auf das obige Ausführungsbeispiel beschränkt, das lediglich der allgemeinen Erläuterung des Kerngedankens der Erfindung dient. Im Rahmen des Schutzumfangs kann die erfindungsgemäße Vorrichtung vielmehr auch andere als die oben beschriebenen Ausgestaltungsformen annehmen. Die Vorrichtung kann hierbei insbesondere Merkmale aufweisen, die eine Kombination aus den jeweiligen Einzelmerkmalen der Ansprüche darstellen, solange die resultierende Vorrichtung zum Schutzumfang gehört, der durch die Ansprüche definiert ist.

Bezugszeichen in den Ansprüchen, der Beschreibung und den Zeichnungen dienen lediglich dem besseren Verständnis der Erfindung und sollen den Schutzumfang nicht einschränken.

## Patentansprüche

1. Verstellbarer Fahrzeugsitz (1) mit einem eine Sitzfläche (11) aufweisenden Sitzboden (10) und einer eine Lehnenfläche (13) aufweisenden Sitzlehne (12), wobei im Sitzboden (10) und/oder in der Sitzlehne (12) Sensoren (30, 30', 31, 31', 32, 32', 33, 33', 34, 35, 36, 37, 38, 38', 39, 39') vorgesehen sind, die von einer auf dem Fahrzeugsitz (1) sitzenden Person ausgeübte Kräfte, Drücke und/oder Bewegungen erfassen und daraufhin ein Signal abgeben, wobei eine Steuerungseinrichtung (4) vorgesehen ist, die die von den Sensoren (30, 30', 31, 31', 32, 32', 33, 33', 34, 35, 36, 37, 38, 38', 39, 39') abgegebenen Signale erfasst und im Fahrzeugsitz (1) vorgesehene Aktuatoren (50, 51, 52, 53, 54, 55, 56, 57, 58, 59) zur Verstellung des Sitzbodens (10) und/oder der Sitzlehne (12) oder von Komponenten (15, 16, 17, 18, 19) davon ansteuert, um den Fahrzeugsitz (1) zu verstellen,
**dadurch gekennzeichnet,**
**dass** die Steuerungseinrichtung (4) die von den Sensoren (30, 30', 31, 31', 32, 32', 33, 33', 34, 35, 36, 37, 38, 38', 39, 39') abgegebenen, erfassten Signale auswertet und daraus ein aktuelles Belastungsprofil des Sitzbodens (10) und/oder der Sitzlehne (12) ermittelt,
**dass** die Steuerungseinrichtung (4) das ermittelte aktuelle Belastungsprofil mit in einer Speichereinrichtung (40) gespeicherten, eine definierte Körperbewegung einleitenden Belastungsprofilen vergleicht und das dem aktuellen Belastungsprofil nächstkommende eine definierte Körperbewegung einleitende Belastungsprofil als prädiktives Belastungsprofil bestimmt und
**dass** die Steuerungseinrichtung (4) die Aktuatoren (50, 51, 52, 53, 54 55, 56, 57, 58, 59) derart ansteuert, dass der Sitzboden (10) und/oder die Sitzlehne (12) oder Komponenten (15, 16, 17, 18, 19) davon entsprechend der dem prädiktiven Belastungsprofil zugeordneten Körperbewegung verstellt werden.

2. Verstellbarer Fahrzeugsitz (1) mit einem eine Sitzfläche (11) aufweisenden Sitzboden (10) und einer eine Lehnenfläche (13) aufweisenden Sitzlehne (12), wobei im Sitzboden (10) und/oder in der Sitzlehne (12) Sensoren (30, 30', 31, 31', 32, 32', 33, 33', 34, 35, 36, 37, 38, 38', 39, 39') vorgesehen sind, die von einer auf dem Fahrzeugsitz (1) sitzenden Person ausgeübte Kräfte, Drücke und/oder Bewegungen erfassen und daraufhin ein Signal abgeben, wobei eine Steuerungseinrichtung (4) vorgesehen ist, die die von den Sensoren (30, 30', 31, 31', 32, 32', 33, 33', 34, 35, 36, 37, 38, 38', 39, 39') abgegebenen Signale erfasst und im Fahrzeugsitz (1) vorgesehene Aktuatoren (50, 51, 52, 53, 54, 55, 56, 57, 58, 59) zur Verstellung des Sitzbodens (10) und/oder der Sitzlehne (12) oder von Komponenten (15, 16, 17, 18, 19) davon ansteuert, um den Fahrzeugsitz (1) zu verstellen,
**dadurch gekennzeichnet,**
**dass** die Steuerungseinrichtung (4) die von den Sensoren (30, 30', 31, 31', 32, 32', 33, 33', 34, 35, 36, 37, 38, 38', 39, 39') abgegebenen, erfassten Signale über eine vorgegebene Zeitspanne auswertet und daraus eine zeitabhängige aktuelle Belastungsprofildynamik des Sitzbodens (10) und/oder der Sitzlehne (12) ermittelt,
**dass** die Steuerungseinrichtung (4) die ermittelte aktuelle Belastungsprofildynamik mit in einer Speichereinrichtung (40) gespeicherten, physiologische Körperbewegungsmuster wiedergebenden Belastungsprofildynamiken vergleicht und die der aktuellen Belastungsprofildynamik nächstkommende ein definiertes physiologisches Körperbewegungsmuster wiedergebende Belastungsprofildynamik als prädiktive Belastungsprofildynamik bestimmt und
**dass** die Steuerungseinrichtung (4) die Aktuatoren (50, 51, 52, 53, 54, 55, 56, 57, 58, 59) derart ansteuert, dass der Sitzboden (10) und/oder die Sitzlehne (12) oder Komponenten (15, 16, 17, 18, 19) davon entsprechend dem der prädiktiven Belastungsprofildynamik zugeordneten Körperbewegungsmuster zeitabhängig verstellt werden.

3. Verstellbarer Fahrzeugsitz nach Anspruch 2,
**dadurch gekennzeichnet,**
**dass** die Verstellung des Sitzbodens (10) und/oder der Sitzlehne (12) oder von Komponenten (15, 16, 17, 18, 19) davon synchron zu dem der prädiktiven Belastungsprofildynamik zugeordneten physiologischen Körperbewegungsmuster erfolgt.

4. Verstellbarer Fahrzeugsitz nach Anspruch 2,
**dadurch gekennzeichnet,**
**dass** die Verstellung des Sitzbodens (10) und/oder der Sitzlehne (12) oder von Komponenten (15, 16, 17, 18, 19) davon dem der prädiktiven Belastungsprofildynamik zugeordneten physiologischen Körperbewegungsmuster vorauseilend oder alternativ nacheilend erfolgt.

5. Verstellbarer Fahrzeugsitz nach einem der vorhergehenden Ansprüche,
**dadurch gekennzeichnet,**
**dass** bei der Erfassung einer Eingangsgröße mittels zumindest eines der Sensoren (30, 30', 31, 31', 32, 32', 33, 33', 34, 35, 36, 37, 38, 38', 39, 39') in einem Bereich des Fahrzeugsitzes (1) dieser Bereich von zumindest einem der Aktuatoren (50, 51, 52, 53, 54, 55, 56, 57, 58, 59) verstellt wird, um der Eingangsgröße nachzugeben.

6. Verstellbarer Fahrzeugsitz nach einem der vorhergehenden Ansprüche,
**dadurch gekennzeichnet,**
**dass** die Steuerungseinrichtung (4) die von den Sensoren (30, 30', 31, 31', 32, 32', 33, 33', 34, 35, 36, 37, 38, 38', 39, 39') abgegebenen, erfassten Signale auswertet und daraus ein aktuelles Belastungsprofil des Sitzbodens (10) und/oder der Sitzlehne (12) ermittelt,
**dass** die Steuerungseinrichtung (4) das ermittelte aktuelle Belastungsprofil mit zumindest einem in einer Speichereinrichtung (40) gespeicherten Standard-Belastungsprofil vergleicht und
**dass** die Steuerungseinrichtung (4) die Aktuatoren (50, 51, 52, 53, 54, 55, 56, 57, 58, 59) derart ansteuert, dass das ermittelte Belastungsprofil an das Standard-Belastungsprofil angenähert oder angeglichen wird.

7. Verstellbarer Fahrzeugsitz nach einem der vorhergehenden Ansprüche,
**dadurch gekennzeichnet,**
**dass** eine erste Gruppe von Aktuatoren (50, 51, 52, 56) nur im Stand des Fahrzeugs von der Steuerungseinrichtung (4) ansteuerbar ist und dass eine zweite Gruppe von Aktuatoren (53, 54, 55, 57, 58, 59) während der Fahrt und im Stand des Fahrzeugs (2) von der Steuerungseinrichtung (4) ansteuerbar ist.

8. Verstellbarer Fahrzeugsitz nach Anspruch 7,
**dadurch gekennzeichnet,**
**dass** die zweite Gruppe von Aktuatoren jene Aktuatoren (53, 54, 55, 57, 58, 59) aufweist, die die Verstellung von zumindest einer der folgenden Fahrzeugsitzkomponenten beziehungsweise -einstellungen bewirken: Seitenwangen (15, 16) des Sitzbodens (10), Seitenwangen (18, 19) der Sitzlehne (12), Sitzflächenbreite, Lehnenflächenbreite, Sitzflächenlänge, Oberschenkelauflage (17), Lordosenstütze (13").

9. Fahrzeug mit zumindest einem verstellbaren Fahrzeugsitz gemäß einem der vorhergehenden Ansprüche.

## Claims

1. Adjustable vehicle seat (1) with a seat base (10) comprising a seat surface (11) and with a backrest (12) comprising a backrest surface (13), wherein sensors (30, 30', 31, 31', 32, 32', 33, 33', 34, 35, 36, 37, 38, 38', 39, 39') are provided in the seat base (10) and/or in the backrest (12), which sensors detect forces, pressures and/or movements exerted by a person seated on the vehicle seat (1) and then output a signal, wherein a control device (4) is provided, which control device detects the signals output by the sensors (30, 30', 31, 31', 32, 32', 33, 33', 34, 35, 36, 37, 38, 38', 39, 39') and actuates actuators (50, 51, 52, 53, 54, 55, 56, 57, 58, 59), which are provided in the vehicle seat (1), for adjusting the seat base (10) and/or the backrest (12) or components (15, 16, 17, 18, 19) thereof in order to adjust the vehicle seat (1),
**characterized**
**in that** the control device (4) evaluates the detected signals output by the sensors (30, 30', 31, 31', 32, 32', 33, 33', 34, 35, 36, 37, 38, 38', 39, 39') and ascertains therefrom a current load profile of the seat base (10) and/or the backrest (12),
**in that** the control device (4) compares the ascertained current load profile with load profiles which are stored in a memory device (40) and introduce a defined body movement, and determines the load profile which is closest to the current load profile and introduces a defined body movement as the predictive load profile, and in that the control device (4) actuates the actuators (50, 51, 52, 53, 54, 55, 56, 57, 58, 59) in such a way that the seat base (10) and/or the backrest (12) or components (15, 16, 17, 18, 19) thereof are adjusted in accordance with the body movement associated with the predictive load profile.

2. Adjustable vehicle seat (1) with a seat base (10) comprising a seat surface (11) and with a backrest (12) comprising a backrest surface (13), wherein sensors (30, 30', 31, 31', 32, 32', 33, 33', 34, 35, 36, 37, 38, 38', 39, 39') are provided in the seat base (10) and/or in the backrest (12), which sensors detect forces, pressures and/or movements exerted by a person seated on the vehicle seat (1) and then output a signal, wherein a control device (4) is provided, which control device detects the signals output by the sensors (30, 30', 31, 31', 32, 32', 33, 33', 34, 35, 36, 37, 38, 38', 39, 39') and actuates actuators (50, 51, 52, 53, 54, 55, 56, 57, 58, 59), which are provided in the vehicle seat (1), for adjusting the seat base (10) and/or the backrest (12) or components (15, 16, 17, 18, 19) thereof in order to adjust the vehicle seat (1),
**characterized**
**in that** the control device (4) evaluates the detected signals output by the sensors (30, 30', 31, 31', 32, 32', 33, 33', 34, 35, 36, 37, 38, 38', 39, 39') over a prespecified time period and ascertains therefrom time-dependent current load profile dynamics of the seat base (10) and/or the backrest (12),
**in that** the control device (4) compares the ascertained current load profile dynamics with load profile dynamics which reproduce physiological body movement patterns stored in a memory device (40), and determines the load profile dynamics which are closest to the current load profile dynamics and reproduce a defined physiological body movement pattern as predictive load profile dynamics, and
**in that** the control device (4) actuates the actuators (50, 51, 52, 53, 54, 55, 56, 57, 58, 59) in such a way that the seat base (10) and/or the backrest (12) or components (15, 16, 17, 18, 19) thereof are adjusted in a time-dependent manner in accordance with the body movement pattern associated with the predictive load profile dynamics.

3. Adjustable vehicle seat according to Claim 2,
**characterized**
**in that** the adjustment of the seat base (10) and/or the backrest (12) or of components (15, 16, 17, 18, 19) thereof is carried out in synchronism with the physiological body movement pattern associated with the predictive load profile dynamics.

4. Adjustable vehicle seat according to Claim 2,
**characterized**
**in that** the adjustment of the seat base (10) and/or the backrest (12) or of components (15, 16, 17, 18, 19) thereof is carried out so as to lead or alternatively lag the physiological body movement patterns associated with the predictive load profile dynamics

5. Adjustable vehicle seat according to one of the preceding claims,
**characterized**
**in that** on detecting an input variable by means of at least one of the sensors (30, 30', 31, 31', 32, 32', 33, 33', 34, 35, 36, 37, 38, 38', 39, 39') in a region of the vehicle seat (1), said region is adjusted by at least one of the actuators (50, 51, 52, 53, 54, 55, 56, 57, 58, 59) in order to comply with the input variable.

6. Adjustable vehicle seat according to one of the preceding claims,
**characterized**
**in that** the control device (4) evaluates the detected signals output by the sensors (30, 30', 31, 31', 32, 32', 33, 33', 34, 35, 36, 37, 38, 38', 39, 39') and ascertains therefrom a current load profile of the seat base (10) and/or the backrest (12),
**in that** the control device (4) compares the ascertained current load profile with at least one standard load profile stored in a memory device (40), and
**in that** the control device (4) actuates the actuators (50, 51, 52, 53, 54, 55, 56, 57, 58, 59) in such a way that the ascertained load profile approximates to or equals the standard load profile.

7. Adjustable vehicle seat according to one of the preceding claims,
**characterized**
**in that** a first group of actuators (50, 51, 52, 56) can be actuated by the control device (4) only when the vehicle is at a standstill, and in that a second group of actuators (53, 54, 55, 57, 58, 59) can be actuated by the control device (4) while travelling and when the vehicle is at a standstill (2).

8. Adjustable vehicle seat according to Claim 7,
**characterized**
**in that** the second group of actuators comprises those actuators (53, 54, 55, 57, 58, 59) that cause the adjustment of at least one of the following vehicle seat components or settings: side panels (15, 16) of the seat base (10), side panels (18, 19) of the backrest (12), width of the seat surface, width of the backrest surface, length of the seat surface, thigh support (17) and lumbar support (13").

9. Vehicle with at least one adjustable vehicle seat according to one of the preceding claims.

## Revendications

1. Siège de véhicule réglable (1) comprenant une assise (10) pourvue d'une surface de siège (11) et un dossier (12) pourvu d'une surface de dossier (13), des capteurs (30, 30', 31, 31', 32, 32', 33, 33', 34, 35, 36, 37, 38, 38', 39, 39') étant prévus dans l'assise (10) et/ou dans le dossier (12) pour détecter les forces, pressions et/ou mouvements exercés par une personne assise sur le siège de véhicule (1) puis pour délivrer un signal, un dispositif de commande (4) étant prévu pour détecter les signaux émis par les capteurs (30, 30', 31, 31', 32, 32', 33, 33', 34, 35, 36, 37, 38, 38', 39, 39') et pour commander des actionneurs (50, 51, 52, 53, 54, 55, 56, 57, 58, 59) prévus dans le siège de véhicule (1) et destinés à régler l'assise (10) et/ou le dossier (12) ou des composants (15, 16, 17, 18, 19) de ceux-ci afin de régler le siège de véhicule (1),
**caractérisé en ce que**
le dispositif de commande (4) évalue les signaux détectés émis par les capteurs (30, 30', 31, 31', 32, 32', 33, 33', 34, 35, 36, 37, 38, 38', 39, 39') et détermine à partir de là un profil de charge actuel de l'assise (10) et/ou du dossier (12),
le dispositif de commande (4) compare le profil de charge actuel déterminé à des profils de charge qui sont mémorisés dans un dispositif de mémorisation (40) et qui induisent un mouvement de corps défini et le profil de charge qui se rapproche le plus du profil de charge actuel et qui induit un mouvement de corps défini est déterminé comme profil de charge prédictif et
le dispositif de commande (4) commande les actionneurs (50, 51, 52, 53, 54, 55, 56, 57, 58, 59) de manière à ce que l'assise (10) et/ou le dossier (12) ou des composants (15, 16, 17, 18, 19) de ceux-ci soient réglés en fonction du mouvement de corps associé au profil de charge prédictif.

2. Siège de véhicule réglable (1) comprenant une assise (10) pourvue d'une surface de siège (11) et un dossier (12) pourvue d'une surface de dossier (13), des capteurs (30, 30', 31, 31', 32, 32', 33, 33', 34, 35, 36, 37, 38, 38', 39, 39') étant prévus dans l'assise (10) et/ou dans le dossier (12) pour détecter les forces, pressions et/ou mouvements exercés par une personne assise sur le siège de véhicule (1) puis pour émettre un signal, un dispositif de commande (4) étant prévu pour détecter les signaux émis par les capteurs (30, 30', 31, 31', 32, 32', 33, 33', 34, 35, 36, 37, 38, 38', 39, 39') et pour commander des actionneurs (50, 51, 52, 53, 54, 55, 56, 57, 58, 59) prévus dans le siège de véhicule (1) et destinés à régler l'assise (10) et/ou le dossier (12) ou des composants (15, 16, 17, 18, 19) de ceux-ci afin de régler le siège de véhicule (1),
**caractérisé en ce que**
le dispositif de commande (4) évalue les signaux détectés, émis par les capteurs (30, 30', 31, 31', 32, 32', 33, 33', 34, 35, 36, 37, 38, 38', 39, 39'), sur un intervalle de temps prédéterminé et détermine à partir là une dynamique de profil de charge actuel, fonction du temps, de l'assise (10) et/ou du dossier (12),
le dispositif de commande (4) compare la dynamique de profil de charge actuelle déterminée à des dynamiques de profil de charge reproduisant des modèles de mouvement de corps physiologiques et mémorisés dans un dispositif de mémorisation (40) et détermine la dynamique de profil de charge, qui se rapproche le plus de la dynamique de profil de charge actuelle et qui reproduit un modèle de mouvement de corps physiologique défini, comme dynamique de profil de charge prédictive et
le dispositif de commande (4) commande les actionneurs (50, 51, 52, 53, 54, 55, 56, 57, 58, 59) de manière à ce que l'assise (10) et/ou le dossier (12) ou des composants (15, 16, 17, 18, 19) de ceux-ci soient réglés en fonction du temps conformément au modèle de mouvement de corps associé à la dynamique de profil de charge prédictive.

3. Siège de véhicule réglable selon la revendication 2,
**caractérisé en ce que**
le réglage de l'assise (10) et/ou du dossier (12) ou de composants (15, 16, 17, 18, 19) de ceux-ci est effectué de manière synchrone avec le modèle de mouvement de corps physiologique associé à la dynamique de profil de charge prédictive.

4. Siège de véhicule réglable selon la revendication 2,
**caractérisé en ce que**
le réglage de l'assise (10) et/ou du dossier (12) ou de composants (15, 16, 17, 18, 19) de ceux-ci est effectué en avance ou en variante en retard par rapport au modèle de mouvement de corps physiologique associé à la dynamique de profil de charge prédictive.

5. Siège de véhicule réglable selon l'une des revendications précédentes,
**caractérisé en ce que**
lors de la détection d'une grandeur d'entrée au moyen d'au moins un des capteurs (30, 30', 31, 31', 32, 32', 33, 33', 34, 35, 36, 37, 38, 38', 39, 39') dans une région du siège de véhicule (1), cette région est réglée par au moins un des actionneurs (50, 51, 52, 53, 54, 55, 56, 57, 58, 59) de manière à se conformer à la grandeur d'entrée.

6. Siège de véhicule réglable selon l'une des revendications précédentes,
**caractérisé en ce que**
le dispositif de commande (4) évalue les signaux détectés, émis par les capteurs (30, 30', 31, 31', 32, 32', 33, 33', 34, 35, 36, 37, 38, 38', 39, 39'), et détermine à partir de là un profil de charge actuel de l'assise (10) et/ou du dossier (12),
le dispositif de commande (4) compare le profil de charge actuel déterminé à au moins un profil de charge standard mémorisé dans un dispositif de mémorisation (40) et
le dispositif de commande (4) commande les actionneurs (50, 51, 52, 53, 54, 55, 56, 57, 58, 59) de manière à rapprocher le profil de charge déterminé du profil de charge standard ou à l'adapter à celui-ci.

7. Siège de véhicule réglable selon l'une des revendications précédentes,
**caractérisé en ce que**
un premier groupe d'actionneurs (50, 51, 52, 56) ne peut être commandé par le dispositif de commande (4) que lorsque le véhicule est à l'arrêt et
un deuxième groupe d'actionneurs (53, 54, 55, 57, 58, 59) peut être commandé par le dispositif de commande (4) pendant le déplacement du véhicule (2) et pendant que celui-ci est à l'arrêt.

8. Siège de véhicule réglable selon la revendication 7,
**caractérisé en ce que**
le deuxième groupe d'actionneurs comprend les actionneurs (53, 54, 55, 57, 58, 59) qui effectuent le réglage d'au moins un des composants ou ajustements de siège de véhicule suivants : joues latérales (15, 16) de l'assise (10), joues latérales (18, 19) du dossier (12), largeur de surface de siège, largeur de surface de dossier, longueur de surface de siège, appui de cuisse (17), support lombaire (13").

9. Véhicule comprenant au moins un siège de véhicule réglable selon l'une des revendications précédentes.
